# EUROPEAN PATENT APPLICATION

(11) **EP 4 488 857 A1**
(43) Date of publication of application: **08.01.2025**
(21) Application number: 22929973.0
(22) Date of filing: 23.12.2022
(51) Int. Cl.: G06F 21/12, G06F 21/44

(54) **WEB APPLICATION SERVER, WEB APPLICATION PROGRAM, AND METHOD FOR PROVIDING WEB APPLICATION**

(30) Priority: 04.03.2022 JP 2022033702
(71) Applicant: Casio Computer Co., Ltd., Tokyo 151-8543 (JP)
(72) Inventor: ONO, Manato, Hamura-shi, Tokyo 205-8555 (JP)
(74) Representative: Grünecker Patent- und Rechtsanwälte PartG mbB
(86) International application number: PCT/JP2022/047722
(87) International publication number: WO 2023/166831

(57) **Abstract**

A web application server includes a communication unit; and at least a processor, wherein the processor assigns, in response to a request from a client, authentication information to a web application program described in a low-level language, transmits the web application program to which the authentication information is assigned to the client, and receives a verification request of the authentication information from the client in accordance with a request from the web application program at a time of activating the web application program, and returns a result of a verification of the authentication information to the client.

## Description

### FIELD

The present invention relates to a web application server, a web application program, and a web application providing method.

### BACKGROUND

In recent years, online classes have been introduced. In such an online class, a web application that provides various functions for a class on a web browser may be used. The web application is usually stored in a web application server on a network, is downloaded from the web application server to the terminal as necessary, and runs on a web browser of the terminal. In some recent web applications, a program code is described using a machine language or a low-level language which is a language close to the machine language.

### CITATION LIST

### PATENT LITERATURE

Patent Literature 1: Jpn. Pat. Appln. KOKAI Publication. No. 2003-223329 A

### SUMMARY

### TECHNICAL PROBLEM

Since the web application is published, the program code of the web application may be acquired by the third party, and the acquired program code may be illegally used in the environment of the third party.

An object of the present invention is to provide a web application server, a web application program, and a web application providing method capable of preventing unauthorized use of a web application.

### SOLUTION TO PROBLEM

A web application server according to a first aspect of the invention includes: a communication unit; and at least a processor, wherein the processor assigns, in response to a request from a client, authentication information to a web application program described in a low-level language, transmits the web application program to which the authentication information is assigned to the client, and receives a verification request of the authentication information from the client in accordance with a request from the web application program at a time of activating the web application program, and returns a result of a verification of the authentication information to the client.

A web application program according to a second aspect of the invention causes a computer of a client to execute the steps of: transmitting, to a server, a verification request for validity of authentication information described in a program code described in a low-level language; and continuing a process described in the program code in a case where the authentication information is valid as a result of a verification from the server, and stopping an execution of the process of the program code in a case where the authentication information is not valid.

A web application providing method according to a third aspect of the invention includes: transmitting, to a client, a web application program described in a low-level language, authentication information being assigned to the web application program by a server in response to a request from the client; the client making a verification request for the authentication information in accordance with a request from the web application program at a time of activating the web application program; and the server receiving the verification request for the authentication information and returning a result of a verification of the authentication information to the client.

### ADVANTAGEOUS EFFECTS OF INVENTION

According to the present invention, it is possible to provide a web application server, a web application program, and a web application providing method capable of preventing unauthorized use of a web application.

### BRIEF DESCRIPTION OF THE DRAWINGS

FIG. 1 is a diagram showing an example of the configuration of a system according to an embodiment of the present invention.
FIG. 2 is a diagram illustrating an example of screen display by a web application operating on a web browser of a terminal.
FIG. 3 is a flowchart illustrating a flow of a process of a web application.
FIG. 4 is a flowchart illustrating a flow of a process by a server in a case where an arithmetic program is requested from a web application.
FIG. 5A is a diagram illustrating an example of a data structure of an arithmetic program stored in a storage.
FIG. 5B is a diagram illustrating an example of an arithmetic program transmitted to a terminal.
FIG. 6 is a flowchart illustrating a flow of processing at the time of activating an arithmetic program in a terminal.
FIG. 7 is a flowchart illustrating a flow of a process by a server after download of an arithmetic program is completed.

### DETAILED DESCRIPTION

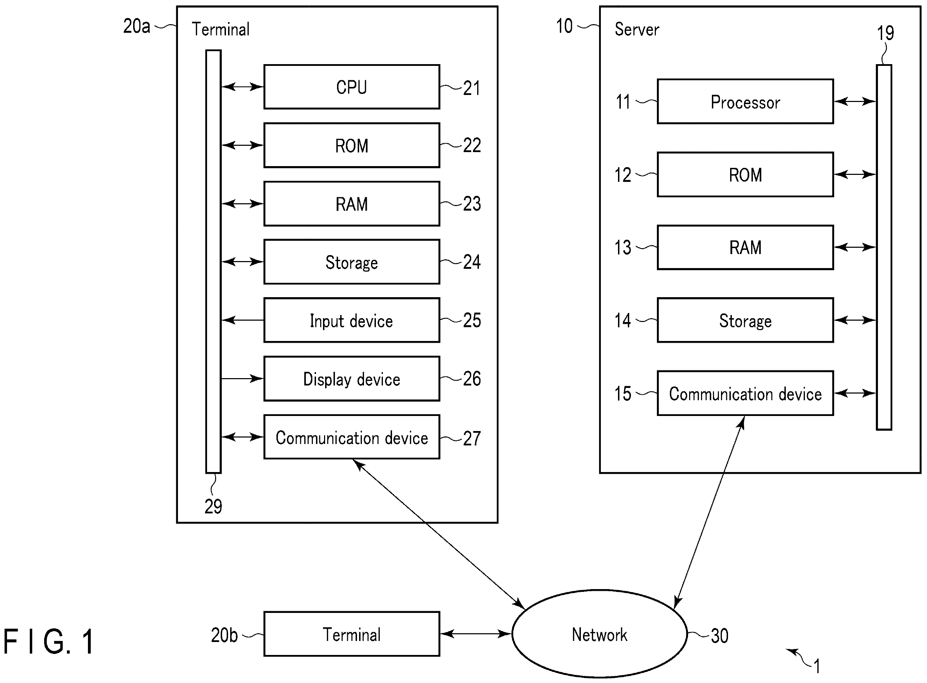

An embodiment of the present invention will be described with reference to the drawings. FIG. 1 is a diagram illustrating an example of a configuration of a system 1 according to an embodiment of the present invention. The system 1 is a server-client system including a server 10 and terminals 20a and 20b. The server 10 and the terminals 20a and 20b are communicably connected via a network 30. The network 30 is, for example, the Internet. The number of terminals is not limited to two.

The server 10 as a web application server includes a processor 11, a ROM 12, a RAM 13, a storage 14, and a communication device 15. Each of these is connected to each other via a system bus 19.

The processor 11 may be an integrated circuit including a central processing unit (CPU) and the like. The processor 11 controls the operation of the server 10 according to a program stored in the storage 14. A processor other than the CPU, for example, an application specific integrated circuit (ASIC), a field programmable gate array (FPGA), a graphic processing unit (GPU), or the like may be used.

The ROM 12 records information used for the operation of the processor 11 and the like. The RAM 13 is a main storage device for the operation of the processor 11 and the like.

The storage 14 stores various programs such as a server control program used by the processor 11 and an arithmetic program for executing various computations, parameters, and the like. The various programs in the embodiment include web applications executed on web browsers of the terminals 20a and 20b. The web application in the embodiment includes a web application for mathematical education. The web application for mathematical education performs various operations such as displaying various kinds of content for mathematical education on the web browser according to the operation of the terminals 20a and 20b on the web browser. The program code of the web application for mathematical education in the embodiment may be described in a high-level language such as JavaScript (registered trademark). Further, the web application in the embodiment includes an arithmetic program that is downloaded in accordance with a request from a web application for mathematical education running on the web browser and executes various computations designated by an operation on the web browser of the user. The arithmetic program in the embodiment can be described in a low-level language such as WebAssembly. Here, the high-level language is a programming language which is easily understood by humans and can be converted into a low-level language by, for example, an interpreter, a compiler, or the like, such as, in addition to JavaScript, a script language such as Python or Ruby, or, such as C language, C++, or ObjectiveC. On the other hand, the low-level language includes a programming language described in an instruction set of the CPU itself, or a format close thereto such as, in addition to WebAssembly, an assembly language, a machine language, or the like. Here, a machine language object code that can be directly executed by the CPU is also included in the low-level language.

The communication device 15 is a communication unit including a circuit for communicating with an external communication network such as the network 30.

The terminals 20a and 20b as clients may be electronic devices such as personal computers (PCs), tablet terminals, and smartphones. In addition, the terminals 20a and 20b may be scientific calculators or the like having a communication function. Hereinafter, the configuration of the terminal 20a will be described assuming that the terminal 20a and the terminal 20b have the same configuration. Note that the terminal 20a and the terminal 20b do not necessarily have the same configuration.

The terminal 20a includes a CPU 21, a ROM 22, a RAM 23, a storage 24, an input device 25, a display device 26, and a communication device 27. Each of these is connected to each other via a system bus 29.

The CPU 21 is a processor that controls various operations of the terminal 20a. The CPU 21 controls the operation of the terminal 20a by executing various programs according to an input signal from the input device 25 and a reception signal by the communication device 27. The various programs may be downloaded from the server 10 to the storage 24 via the network 30 and the communication device 27.

The ROM 22 records an activation program and the like of the terminal 20a. The RAM 23 is a main storage device for the CPU 21 and the like. The storage 24 stores various programs such as a terminal control program used by the CPU 21, parameters, and the like.

The input device 25 includes a keyboard, a mouse, a touch panel, and the like. In response to a user's operation via the input device 25, a signal indicating the content of the user operation is input to the CPU 21 via the system bus 29.

The display device 26 is a liquid crystal display, an organic EL display, or the like. The display device 26 may be provided integrally in the terminal 20a, or may be provided separately from the terminal 20a. Various images are displayed on the display device 26.

The communication device 27 is a communication unit including a circuit for communicating with an external communication network such as the network 30.

In an example, the user designates the URL of server 10 in the web browser operating on terminal 20a. At this time, a display screen for the web application stored in the server 10 is displayed on the web browser of the terminal 20a. A request to the server 10 is issued in response to an operation via the input device 25 on the display screen. The server 10 executes a process according to the request, and returns a processing result to the terminal 20a as a response. The terminal 20a performs display or the like according to the user's operation according to the response from the server 10. In addition, the arithmetic program can be downloaded to the terminal 20a in accordance with a request from a web application running on the terminal 20a. In a case where the arithmetic program is downloaded, the calculation according to the process of the arithmetic program is executed on the web browser.

As described above, in the system 1, a function as a web application for mathematical education is realized by the web application program on the web browser of the terminal 20a or the terminal 20b and the arithmetic program operating.

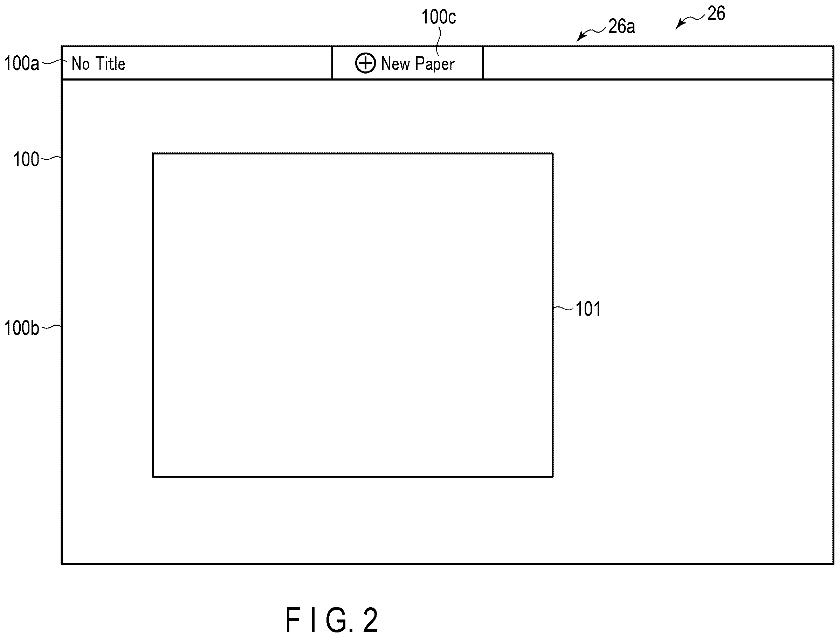

FIG. 2 is a diagram illustrating an example of screen display by a web application operating on the web browser of the terminal 20a.

A screen 26a displayed on display device 26 of terminal 20a includes an upper area 100a and a lower area 100b. The upper area 100a is displayed on the upper part of the screen 26a. The upper area 100a is an elongated area as compared with the lower area 100b. In the upper area 100a, a new paper creation icon 100c is displayed. The lower area 100b is an area disposed below the upper area 100a in the screen 26a. In the following description, the lower area 100b is also referred to as a paper 100. Various "sticky notes" 101 may be displayed on the paper 100. The sticky note 101 is a display area for displaying various pieces of information related to the web application. For example, the sticky note 101 includes a formula sticky note for creating a formula, a graph sticky note for creating a graph, a table sticky note for creating a table, a figure sticky note for creating a figure, a comment sticky note for creating a comment, and the like. The sticky note 101 may be a floating object. The floating object is an object (display body) displayed on a screen, and is an object capable of changing at least a display position according to a user operation.

In addition, arithmetic processing such as calculation of a formula input in the sticky note 101, creation of a graph, and creation of a table is performed by the arithmetic program. In a case where an operation such as calculation of a formula, creation of a graph, or creation of a table is performed in the sticky note 101, the web application makes a request of the server 10 for an arithmetic program. The arithmetic program downloaded in response to the request executes various computations such as creation of a graph of a formula and creation of a table, and passes a computation result to the web application. In response to this, the web application displays the computation result on the sticky note 101.

In the present embodiment, the system 1 can create various sticky notes starting from the white paper 100. Note that the paper 100 similar to that of the terminal 20a can also be displayed on the terminal 20b.

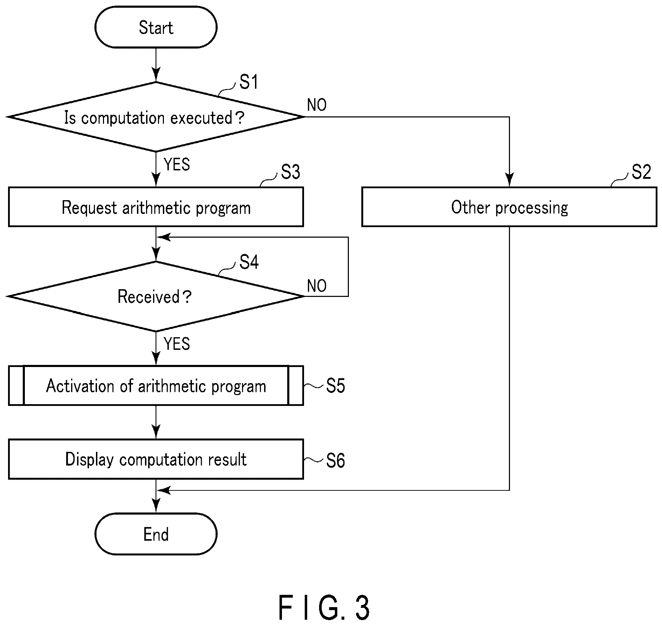

Hereinafter, a flow of a series of processing in the system 1 will be described. FIG. 3 is a flowchart illustrating a flow of a process of the web application. The process of FIG. 3 is periodically executed by, for example, the CPU 21 of the terminal 20a according to the program code of the web application. In a case where the web application is activated, login processing such as input of an ID and a password may be performed.

In step S1, the CPU 21 determines whether an operation of executing the computation has been performed by the user. As described above, after activating the web application in the embodiment, the paper 100 may be displayed on the web browser. Then, the user can create various sticky notes 101 on the paper 100 and execute various computations such as calculation of a formula, creation of a graph, creation of a table, and creation of a figure in the created sticky note 101. In step S1, in a case where an operation for executing various computations such as calculation of the formula, creation of a graph, creation of a table, and creation of a diagram is performed, it is determined that an operation of executing the computation is performed by the user. In a case where it is determined in step S1 that the operation of executing the computation has not been performed, the process proceeds to step S2. In a case where it is determined in step S2 that the operation of executing the computation has been performed, the process proceeds to step S3.

In step S2, the CPU 21 executes other processing. For example, in a case where the operation of moving the sticky note 101 that is a floating object is performed, the CPU 21 updates the display position of the sticky note 101 on the paper 100. After the other processing, the process of FIG. 3 ends.

In step S3, the CPU 21 makes a request of the server 10 for the arithmetic program in order to execute the computation instructed to be executed by the user according to the request from the web application.

In step S4, the CPU 21 determines whether the arithmetic program has been received. In step S4, the processing stands by until it is determined that the arithmetic program has been received. In a case where the arithmetic program has not been received by the predetermined time, timeout processing may be performed. In a case where it is determined in step S4 that the arithmetic program has been received, the process proceeds to step S5.

In step S5, the CPU 21 activates the arithmetic program. Processing after the activation of the arithmetic program will be described later. Here, the description will be continued assuming that the computation instructed by the user has been executed as a result of the activation of the arithmetic program.

In step S6, the CPU 21 displays the computation result in the sticky note 101. For example, in the case of calculation of a formula, the CPU 21 displays a result calculated by the arithmetic program based on the formula input by the user in the sticky note 101. In addition, for example, in the case of creating a graph, the CPU 21 draws a graph created by the arithmetic program based on the function input by the user in the sticky note 101. In addition, for example, in the case of creating a table, the CPU 21 displays a table created by an arithmetic program based on data input by the user in the sticky note 101. After displaying the computation result, the process of FIG. 3 ends.

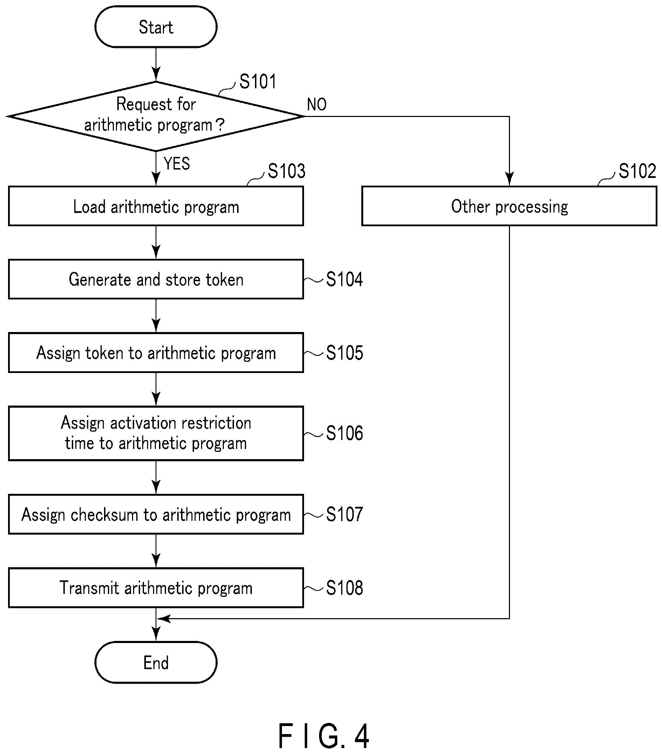

FIG. 4 is a flowchart illustrating a flow of a process by the server 10 in a case where the arithmetic program is requested from the web application. The process of FIG. 4 is periodically executed by, for example, the processor 11 of the server 10 after the web application is started in the terminal 20a.

In step S101, the processor 11 determines whether there is a request for an arithmetic program from the web application of the terminal 20a. In a case where it is determined in step S101 that there is no request for the arithmetic program, the process proceeds to step S102. In a case where it is determined in step S101 that there is a request for the arithmetic program, the process proceeds to step S103.

In step S102, the processor 11 executes other processing. The other processing is a process that does not involve transmission of an arithmetic program. After the other processing, the process of FIG. 4 ends.

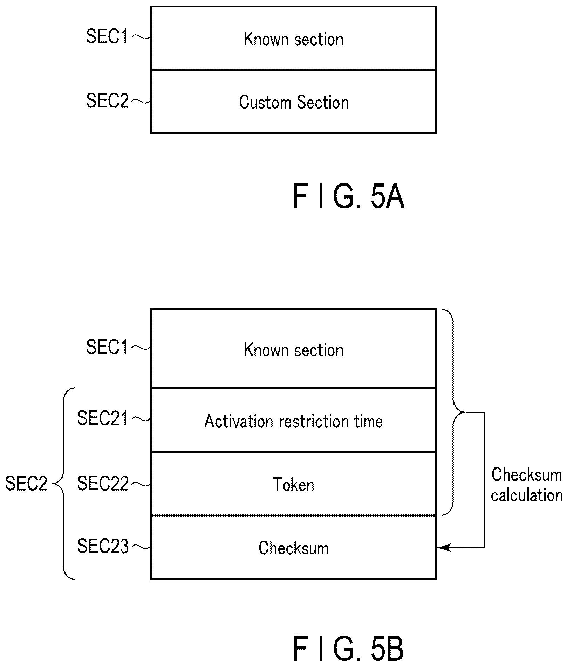

In step S103, the processor 11 loads the arithmetic program from the storage 14 to the RAM 13. FIG. 5A is a diagram illustrating an example of a data structure of an arithmetic program stored in the storage 14 in the embodiment. As illustrated in FIG. 5A, the arithmetic program in the embodiment includes a known section SEC1 and a custom section SEC2. The known section SEC1 stores a substantial program code of the arithmetic program and various pieces of data necessary for arithmetic processing. On the other hand, no data is normally stored in the custom section SEC2. In a case where there is a request for an arithmetic program from the web application of the terminal 20a, various types of data described below are assigned to the custom section SEC2 in a low-level language.

In step S104, the processor 11 generates a token as authentication information. Then, the processor 11 stores the generated token in the storage 14. The token is configured by, for example, a random character string. The token is generated by, for example, a token generation program stored in advance in the storage 14 of the server 10. Note that the token generation algorithm may be any generation algorithm that can generate a unique character string every time there is a request from the arithmetic program. As will be described later, the token is deleted from the storage 14 in a certain period of time. Furthermore, the processor 11 may store the generated token in association with the terminal 20a in the storage 14. For example, the token may be stored together with the media access control (MAC) address of the terminal 20a transmitted as the information about the terminal 20a. Since the MAC address is an identification value uniquely determined for each communication means included in the terminal, even in a case where a confirmation request with a token same as the token stored by chance comes from a malicious terminal, the request from the malicious terminal can be regarded as invalid by collating the MAC address.

In step S105, the processor 11 assigns the generated token to the custom section SEC2 of the arithmetic program loaded in the RAM 13.

In step S106, the processor 11 assigns the activation restriction time to the custom section SEC2 of the arithmetic program loaded in the RAM 13. The activation restriction time is a time at which the arithmetic program is permitted to activate. The activation of the arithmetic program beyond the activation restriction time is prohibited. The activation restriction time is generated, for example, by adding an any time such as 24 hours to the current time. This any time may be designated by, for example, an administrator of the server 10.

In step S107, the processor 11 assigns the checksum to the custom section SEC2 of the arithmetic program loaded into the RAM 13. As the checksum, for example, a hash character string calculated from the data stored in the known section, the data of the token, and the activation restriction time can be used.

In step S108, the processor 11 transmits the arithmetic program loaded into the RAM 13 to the terminal 20a. Thereafter, the process of FIG. 4 ends. As a result, the arithmetic program is provided to the terminal 20a. FIG. 5B is a diagram illustrating an example of an arithmetic program transmitted to the terminal 20a. As illustrated in FIG. 5B, at the time of transmission of the terminal 20a, the activation restriction time is assigned to a custom section SEC21 constituting the custom section SEC2 of the arithmetic program, the token is assigned to a custom section SEC22, and the checksum is assigned to a custom section SEC23. As described above, the checksum is calculated from the data of the known section, the data of the activation restriction time, and the data of the token.

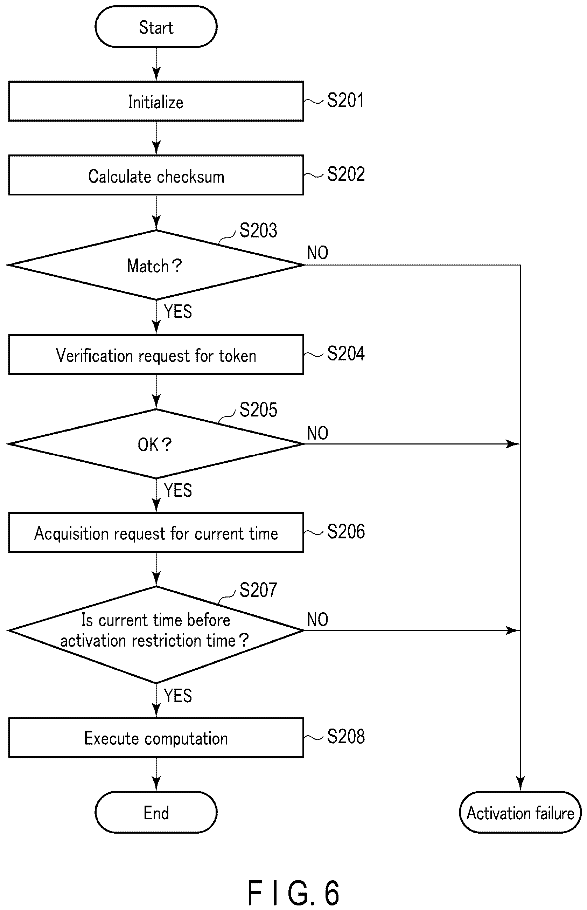

FIG. 6 is a flowchart illustrating a flow of processing at the time of activating the arithmetic program in the terminal 20a. The process of FIG. 6 is executed by the CPU 21 of the terminal 20a at the time of activating the arithmetic program.

In step S201, the CPU 21 initializes various parameters for executing the arithmetic program.

In step S202, the CPU 21 calculates a checksum from the data of the known section of the downloaded arithmetic program, the data of the activation restriction time, and the data of the token. The calculation of the checksum is performed according to the generation algorithm same as that of the server 10.

In step S203, the CPU 21 determines whether the calculated checksum matches the checksum assigned to the custom section of the downloaded arithmetic program. In a case where it is determined in step S203 that the calculated checksum does not match the checksum assigned to the custom section of the downloaded arithmetic program, the CPU 21 determines that the arithmetic program failed to activate. In this case, the CPU 21 displays a message on the web browser indicating that, for example, the arithmetic program failed to activate. That is, the fact that the checksums do not match means that there is a possibility of falsification of the arithmetic program, and the activation fails. In a case where it is determined in step S203 that the calculated checksum matches the checksum assigned to the custom section of the downloaded arithmetic program, the process proceeds to step S204.

In step S204, the CPU 21 makes a verification request for the validity of the token by transmitting the token stored in the custom section of the arithmetic program to the server 10. After the verification result of the validity of the token is received from the server 10, the process proceeds to step S205. Although the verification of the validity of the token by the server 10 will be described in detail later, the verification of the validity of the token is performed by whether the token same as the token transmitted from the terminal 20a is also stored in the server 10. In a case where the token is stored in the server 10, the information of "OK" is transmitted as the verification result of the validity of the token, and in a case where the token is not stored in the server 10, the information of "NG" is transmitted as the verification result of the validity of the token.

Here, the server information which is the information about the inquiry destination at the time of the verification request of the validity of the token may be encrypted and described in the known section of the arithmetic program. The server information is, for example, a URL of the server 10 which is an inquiry destination of the verification request. Note that the URL of the server 10 as the inquiry destination may be different from the URL of the server 10 as the download source of the web application and the arithmetic program. In the arithmetic program described in a low-level language, since the URL for the token verification request is further described by the encrypted character string, the user of the terminal 20a cannot easily falsify the URL for the token verification request.

In step S205, the CPU 21 determines whether the verification result of the token is OK. In a case where it is determined in step S205 that the verification result of the token is not OK, that is, NG, the CPU 21 determines that the arithmetic program failed to activate. In this case, the CPU 21 displays a message on the web browser indicating that, for example, the arithmetic program failed to activate. The fact that the verification result of the token is NG means that the processing for activating the arithmetic program is started after a lapse of a predetermined time from the download of the arithmetic program. In this case, since there is a possibility of unauthorized use, the activation fails. In a case where it is determined in step S205 that the verification result of the token is OK, the process proceeds to step S206.

In step S206, the CPU 21 requests the current time from the server 10. After the current time is received from the server 10, the process proceeds to step S207.

In step S207, the CPU 21 determines whether the current time acquired from the server 10 is a time before the activation restriction time. In a case where it is determined in step S207 that the current time acquired from the server 10 is not a time before the activation restriction time, it is determined that the arithmetic program failed to activate. In this case, the CPU 21 displays a message on the web browser indicating that, for example, the arithmetic program failed to activate. In a case where it is determined in step S207 that the current time acquired from the server 10 is a time before the activation restriction time, the process proceeds to step S208.

In step S208, the CPU 21 continues the process of the arithmetic program and executes the computation designated by the user. Thereafter, the process of FIG. 6 ends.

Here, the checksum comparison process in steps S202 to S203, the token verification process in steps S204 to S205, and the comparison process between the current time and the activation restriction time in steps S206 to S207 are not necessarily performed in the order illustrated in FIG. 6. That is, the order of the checksum comparison process in steps S202 to S203, the token verification process in steps S204 to S205, and the comparison process between the current time and the activation restriction time in steps S206 to S207 may be appropriately switched.

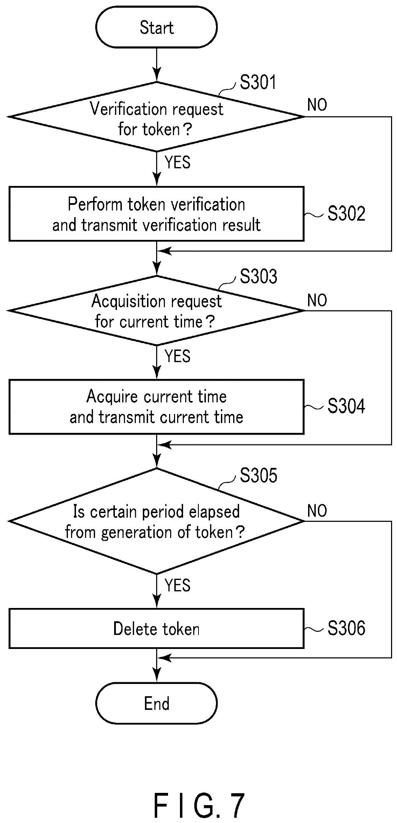

FIG. 7 is a flowchart illustrating a flow of a process by the server 10 after download of the arithmetic program is completed. The process of FIG. 7 is executed by, for example, the processor 11 of the server 10 at regular intervals after the download of the arithmetic program is completed.

In step S301, the processor 11 determines whether a token verification request has been received from the terminal 20a. In a case where it is determined in step S301 that a token verification request has been received from the terminal 20a, the process proceeds to step S302. In a case where it is determined in step S301 that the token verification request has not been received from the terminal 20a, the process proceeds to step S303.

In step S302, the processor 11 verifies the token. Then, the processor 11 transmits the verification result of the token to the terminal 20a. Thereafter, the process proceeds to step S303. For example, the processor 11 verifies the token by determining whether the token same as the token transmitted from the terminal 20a is stored in the storage 14. As described above, the token is deleted from the storage 14 after a certain period of time. Therefore, in a case where the token same as the token transmitted from the terminal 20a is not stored in the storage 14, the verification result of the token is NG. On the other hand, in a case where the token same as the token transmitted from the terminal 20a is stored in the storage 14, the verification result of the token is OK. Note that, in a case where the token is stored in the storage 14 in association with the identification information (for example, the MAC address) of the terminal 20a, the processor 11 may search whether the identification information same as that of the terminal 20a is stored in the storage, and verify the token stored in association with the identification information in a case where the identification information is found. In this way, double checking of the terminal information and the token is performed, and unauthorized use can be more reliably eliminated.

In step S303, the processor 11 determines whether an acquisition request for the current time has been received. In a case where it is determined in step S303 that the acquisition request for the current time has been received, the process proceeds to step S304. In a case where it is determined in step S303 that the acquisition request for the current time has not been received, the process proceeds to step S305.

In step S304, the processor 11 acquires the current time to transmit the acquired current time to the terminal 20a. Thereafter, the process proceeds to step S305.

In step S305, the processor 11 determines whether a certain period such as 7 days has elapsed from the generation of the token. In a case where it is determined in step S305 that the certain period has elapsed from the generation of the token, the process proceeds to step S306. In a case where it is determined in step S305 that the certain period has not elapsed from the generation of the token, the process of FIG. 7 ends.

In step S306, the processor 11 deletes the token stored in the storage 14. Thereafter, the process of FIG. 7 ends. Note that a certain period until the token is deleted may be determined at the discretion of, for example, the administrator of the server 10. In addition, the token may be merely invalidated without being deleted. For the invalidated token, the result of the token verification in step S302 is NG.

As described above, according to the embodiment, at the time of a request for the arithmetic program which is a web application operating on the web browser, the arithmetic program is transmitted after the token, the activation restriction time, and the checksum are assigned. Since the arithmetic program is a web application program, there is a possibility that the program code is read on the web browser, but unauthorized use of the arithmetic program is prevented by the token assigned to the arithmetic program itself, the activation restriction time, and the checksum.

In addition, in the embodiment, the token, the activation restriction time, and the checksum are stored in a custom section that is part of the program code of the arithmetic program described in a low-level language. Therefore, even if the token, the activation restriction time, and the checksum can be read from the arithmetic program downloaded to the terminal 20a, they are also described in a machine language or a language close to the machine language. As a result, it is difficult to falsify the token, the activation restriction time, and the checksum.

In addition, the token is held in the server 10 for a certain period of time. Therefore, even if the token is falsified, unauthorized use of the arithmetic program can be prevented. The current time used for comparison with the activation restriction time is not the current time managed by terminal 20a but the current time managed by server 10. Therefore, even if the current time managed in the terminal 20a is falsified, unauthorized use of the arithmetic program can be prevented. Further, the comparison of the checksums is performed between the checksum calculated in the server 10 and a newly calculated checksum in the terminal 20a. In a case where the arithmetic program is falsified, a checksum having a value different from the value of the checksum calculated by the server 10 is calculated. In this way, even if the content of, for example, the known section of the arithmetic program is falsified, the use thereof can be prevented.

### (Modifications)

Hereinafter, modifications of the embodiment will be described. In the embodiment, as a technology for preventing unauthorized use of an arithmetic program used by a web application for education, a token, an activation restriction time, and a checksum are assigned to the arithmetic program at the time of downloading the arithmetic program. On the other hand, the technology for preventing unauthorized use in the embodiment may be applied to a web application described in any low-level language other than that of the arithmetic program used by the web application for education. For example, not only the arithmetic program but also the entire web application including a user interface such as display and a response to a user input may be described in a low-level language, and a program described in JavaScript may execute a process of only calling the web application described in the low-level language. In this way, at the time of activating one integrated web application, unauthorized use can be checked, and the web application can be prevented from being activated in a case where unauthorized use is suspected. Furthermore, most of the web application program is described in a low-level language, and thus the operation of the program is more confidential.

In the embodiment, the web application for education is described in JavaScript, and the arithmetic program is described in WebAssembly, but description languages of these program codes are also an example.

In addition, in the embodiment, three values of a token, an activation restriction time, and a checksum are assigned to the arithmetic program. However, all of the token, the activation restriction time, and the checksum are not necessarily assigned to the arithmetic program, and for example, only the token may be assigned to the arithmetic program.

Note that the present invention is not limited to the above embodiments, and various modifications can be made in the implementation stage without departing from the gist thereof. In addition, each embodiment may be implemented by appropriately combining them as much as possible, and in this case, the combined effect can be obtained. Furthermore, the above-described embodiments include inventions at various stages, and various inventions can be extracted by an appropriate combination of a plurality of disclosed constituent elements. For example, in a case where the problem described in the section of technical problem to be solved by the invention can be solved and the effect described in the section of advantageous effects of invention can be obtained even if some components are deleted from all the components shown in the embodiment, the configuration from which the components are deleted can be extracted as the invention.

### INDUSTRIAL APPLICABILITY

The web application server, the web application program, and the web application providing method of the present invention can be used for a web application intended for an online class or the like.

### REFERENCE SIGNS LIST

- 1: System
- 10: Server
- 11: Processor
- 12: ROM
- 13: RAM
- 14: Storage
- 15: Communication device
- 19: System bus
- 20a, 20b: Terminal
- 21: CPU
- 22: ROM
- 23: RAM
- 24: Storage
- 25: Input device
- 26: Display device
- 27: Communication device
- 29: System bus
- 30: Network

## Claims

1. A web application server comprising:
a communication unit; and
at least a processor, wherein
the processor
assigns, in response to a request from a client, authentication information to a web application program described in a low-level language,
transmits the web application program to which the authentication information is assigned to the client, and
receives a verification request of the authentication information from the client in accordance with a request from the web application program at a time of activating the web application program, and returns a result of a verification of the authentication information to the client.

2. The web application server according to claim 1, wherein the processor invalidates the authentication information after a lapse of a predetermined time from generation of the authentication information.

3. The web application server according to claim 1 or 2, wherein the processor generates the authentication information every time there is a request from the client.

4. The web application server according to any one of claims 1 to 3, wherein the low-level language includes an assembly language.

5. The web application server according to claim 4, wherein the assembly language includes an assembly language of WebAssembly.

6. A web application program for causing
a computer of a client to execute the steps of:
transmitting, to a server, a verification request for validity of authentication information described in a program code described in a low-level language; and
continuing a process described in the program code in a case where the authentication information is valid as a result of a verification from the server, and stopping an execution of the process of the program code in a case where the authentication information is not valid.

7. The web application program according to claim 6, wherein server information for identifying a server that transmits the verification request is encrypted and described in the program code.

8. A web application providing method comprising:
transmitting, to a client, a web application program described in a low-level language, authentication information being assigned to the web application program by a server in response to a request from the client;
the client making a verification request for the authentication information in accordance with a request from the web application program at a time of activating the web application program; and
the server receiving the verification request for the authentication information and returning a result of a verification of the authentication information to the client.

9. The web application providing method according to claim 8, further comprising invalidating the authentication information after a lapse of a predetermined time from generation of the authentication information.

10. The web application providing method according to claim 8 or 9, wherein the authentication information is generated every time there is a request from the client.

11. The web application providing method according to any one of claims 8 to 10, wherein the low-level language includes an assembly language.

12. The web application providing method according to claim 11, wherein the assembly language includes an assembly language of WebAssembly.
